# EUROPÄISCHE PATENTANMELDUNG

(11) **EP 4 503 338 A1**
(43) Veröffentlichungstag der Anmeldung: **05.02.2025**
(21) Anmeldenummer: 24191069.4
(22) Anmeldetag: 26.07.2024
(51) Int. Cl.: H01R 9/24, H01R 13/7193, H01R 13/504, H01R 13/7197, B60L 50/50, H02K 5/22, H02K 11/02, H02M 1/12, H02M 1/44, H01R 13/405, H01R 13/52, H01R 13/74, B29C 45/00, B29C 45/14, H01R 105/00

(54) **ANSCHLUSSVORRICHTUNG FÜR EINE ELEKTRISCHE MASCHINE, ELEKTRISCHE MASCHINE UND VERFAHREN ZUM HERSTELLEN EINER ANSCHLUSSVORRICHTUNG FÜR EINE ELEKTRISCHE MASCHINE**

(30) Priorität: 04.08.2023 DE 102023207484
(71) Anmelder: Robert Bosch GmbH, 70442 Stuttgart (DE)
(72) Erfinder: Szabo, Daniel, 1103 Budapest (HU); Katlan, Gergo Jozsef, 1115 Budapest (HU)

(57) **Zusammenfassung**

Die Erfindung schafft ein Anschlusselement für eine mehrphasige elektrische Maschine. Das Anschlusselement ist derart einfach ausgestaltet, dass es mittels eines einfachen Spritzgussprozesses realisiert werden kann, bei welchem mehrere Sammelschienen-Elemente umspritzt werden. Hierbei ist in dem Spritzgusselement, das die Sammelschienen-Elemente fixiert, zusätzlich ein Filterelement, beispielsweise ein Ferritkern integriert. Auf diese Weise kann eine sehr kompakte Bauform für ein Anschlusselement mit gleichzeitiger Filterfunktion realisiert werden.

## Beschreibung

### Technisches Gebiet

Die vorliegende Erfindung betrifft eine Anschlussvorrichtung für eine elektrische Maschine, insbesondere eine mehrphasige elektrische Maschine. Die vorliegende Erfindung betrifft ferner eine elektrische Maschine mit einer solchen Anschlussvorrichtung. Weiterhin betrifft die vorliegende Erfindung ein Verfahren zum Herstellen einer Anschlussvorrichtung für eine elektrische Maschine.

### Stand der Technik

Ganz oder zumindest teilweise elektrisch angetriebene Fahrzeuge verfügen über ein elektrisches Antriebssystem, bei welchem eine elektrische Maschine mittels eines elektrischen Stromrichters, insbesondere eines Wechselrichters (Inverter) mit elektrischer Energie versorgt wird, um das Fahrzeug anzutreiben. Optional kann beim Verzögern des Fahrzeugs in einem sogenannten Rekuperationsmodus die elektrische Maschine kinetische Energie des Fahrzeugs in elektrische Energie umwandeln. Die von der elektrischen Maschine dabei bereitgestellte Wechselspannung kann mittels des Stromrichters in eine elektrische Spannung konvertiert werden, die dazu geeignet ist, einen elektrischen Energiespeicher, beispielsweise eine Traktionsbatterie in dem Fahrzeug aufzuladen. Aufgrund der dabei auftretenden hohen elektrischen Leistungen müssen der elektrische Stromrichter und die elektrische Maschine dabei zuverlässig miteinander verbunden werden.

In der Druckschrift 10 2018 201 819 A1 wird eine elektrische Fahrzeugachsenvorrichtung beschrieben. Diese Fahrzeugachsenvorrichtung umfasst eine Leistungselektronik mit einem Inverter, einen Elektromotor sowie einem Getriebe.

### Offenbarung der Erfindung

Die vorliegende Erfindung offenbart eine Anschlussvorrichtung für eine elektrische Maschine, eine elektrische Maschine und ein Verfahren zum Herstellen einer Anschlussvorrichtung für eine elektrische Maschine mit den Merkmalen der unabhängigen Patentansprüche. Weitere vorteilhafte Ausführungsformen sind Gegenstand der abhängigen Patentansprüche.

### Demgemäß ist vorgesehen:

Eine Anschlussvorrichtung für eine mehrphasige elektrische Maschine mit mehreren Stromschienen-Elementen, einem Filterelement und einem elektrisch isolierenden Spritzgusselement. Hierbei ist für jede elektrische Phase der elektrischen Maschine ein Stromschienen-Element vorgesehen. Die mehreren Stromschienen-Elemente sind jeweils an vorbestimmten Positionen von dem Spritzgusselement umschlossen. Hierdurch sind die mehreren Stromschienen-Elemente fixiert. Ferner ist jedes Stromschienen-Element dazu ausgebildet, jeweils an einem ersten Ende mit einem Statoranschluss der elektrischen Maschine elektrisch gekoppelt zu werden. Weiterhin ist jedes Stromschienen-Element dazu ausgebildet, an einem zweiten Ende mit einem Anschlusselement eines Wechselrichters elektrisch gekoppelt zu werden. Das Filterelement ist hierbei in das Spritzgusselement eingebettet. Dabei umschließt das Filterelement die mehreren Stromschienen-Elemente. Somit ist das Filterelement ein integraler Bestandteil des Spritzgusselements, welches die Stromschienen-Elemente umschließt.

### Ferner ist vorgesehen:

Eine elektrische Maschine mit einem Gehäuse und einer erfindungsgemäßen Anschlussvorrichtung. Das Gehäuse ist dazu ausgebildet, einen Stator und einen Rotor der elektrischen Maschine aufzunehmen. Ferner weist das Gehäuse eine Öffnung auf. Hierbei ist jeweils ein Stromschienen-Element mit einem korrespondierenden Anschluss für eine Phase des Stators der elektrischen Maschine elektrisch gekoppelt.

### Schließlich ist vorgesehen:

Ein Verfahren zum Herstellen eines Anschlusselements für eine elektrische Maschine. Das Verfahren umfasst einen Schritt zum Bereitstellen mehrerer Stromschienen-Elemente. Hierbei wird für jede elektrische Phase der elektrischen Maschine ein Stromschienen-Element bereitgestellt. Ferner umfasst das Verfahren einen Schritt zum Bereitstellen eines Filterelements mit einem Ferritkern. Weiterhin umfasst das Verfahren einen Schritt zum Anordnen der mehreren Stromschienen-Elemente und dem Filterelement in einer Spritzgussvorrichtung. Ferner umfasst das Verfahren einen Schritt zum Umspritzen des Filterelements und der mehreren Stromschienen-Elemente mit einem elektrisch isolierenden Material. Auf diese Weise wird um die Stromschienen-Elemente ein elektrisch isolierendes Spritzgusselement ausgebildet. Jedes Stromschienen-Element ist dazu ausgebildet, jeweils an einem ersten Ende mit einem Statoranschluss der elektrischen Maschine elektrisch gekoppelt zu werden und an einem zweiten Ende mit einem Anschlusselement eines Wechselrichters elektrisch gekoppelt zu werden.

### Vorteile der Erfindung

Der vorliegenden Erfindung liegt die Erkenntnis zugrunde, dass für den Anschluss einer mehrphasigen elektrischen Maschine an eine Stromquelle, wie beispielsweise einen elektrischen Stromrichter (Inverter) ein geeigneter Anschluss vorgesehen sein muss. Darüber hinaus kann zur Verringerung der elektromagnetischen Störungen ein separates Filterelement, beispielsweise in Form eines Ferritkerns vorgesehen sein. Das Anbringen eines solchen zusätzlichen Filterelements erfordert dabei einerseits zusätzliche Arbeitsschritte. Darüber hinaus benötigt ein solches zusätzliches Filterelement einen relativ großen Bauraum.

Es ist daher eine Idee der vorliegenden Erfindung, ein Konzept für ein Anschlusselement zum Verbinden der elektrischen Maschine mit einem Stromrichter zu schaffen, welches gleichzeitig auch die erforderlichen Komponenten für eine Filterung zur Unterdrückung elektromagnetischer Störungen beinhalten kann.

Hierzu ist es vorgesehen, ein Anschlusselement zur Kontaktierung der elektrischen Maschine mit einem Stromrichter gleichzeitig mit einem geeigneten Filterelement für die Unterdrückung elektromagnetischer Störungen auszustatten. Durch das Integrieren eines solchen Filterelements in ein Spritzgruß-Bauteil, welches gleichzeitig auch die mechanische Stabilität des Anschlusselement des gewährleistet, kann eine sehr kompakte und effiziente Bauform realisiert werden. Da das Filterelement in dem Spritzgusselement integriert ist, kann eine entsprechende externe Komponente entfallen. Dies verringert den dafür erforderlichen Bauraumbedarf. Darüber hinaus kann durch eine solche integrale Konfiguration auch zuverlässig gewährleistet werden, dass bei einem Zusammenbau des elektrischen Antriebssystems die Filterkomponente nicht vergessen wird.

Gemäß einer Ausführungsform kann das Filterelement einen Ferritkern umfassen. Ferritkerne eignen sich sehr gut zur Filterung elektromagnetischer Einflüsse und haben sich in der Vergangenheit für solche Anwendungsfälle bereits bewährt. Darüber hinaus sind sie auch gut geeignet, um in einer Spritzgusskomponente integriert zu werden.

Gemäß einer Ausführungsform weist jedes Stromschienen-Element in einem Bereich des umschließenden Spritzgusselements eine Aussparung zur Fixierung des Stromschienen-Elements in dem Spritzgusselement auf. Beispielsweise können in den Stromschienen-Elementen Rillen, Vertiefungen, Löcher o. ä. vorgesehen sein, in welchen das Spritzgussmaterial beim Herstellen des Spritzgusselements eindringt und somit ein Verschieben, Bewegen o. ä. von den Stromschienen-Elementen verhindert.

Gemäß einer Ausführungsform umfasst das Spritzgusselement mehrere umspritzte Buchsen. Die einzelnen Buchsen können hierbei derart ausgestaltet sein, dass das Anschlusselement mittels einer Schraube mit einem Gehäuse der elektrischen Maschine verschraubt wird. Beispielsweise können solche Buchsen während des Herstellens des Spritzgusselements ebenfalls in die Spritzgussform eingebracht und umspritzt werden. Buchsen können dabei aus einem beliebigen geeigneten Material, beispielsweise einem Metall oder ähnlichem hergestellt sein.

Gemäß einer Ausführungsform weist das Spritzgusselement eine umlaufende Aussparung auf. Diese Aussparung kann dazu ausgelegt sein, ein Dichtelement zum Abdichten eines Bereichs zwischen der Anschlussvorrichtung und einem Gehäuse der elektrischen Maschine aufzunehmen. Durch eine solche Aussparung kann dabei eine besonders gute Abdichtung zwischen dem Spritzgusselement und dem Gehäuse realisiert werden.

Gemäß einer Ausführungsform ist an dem Spritzgusselement ein Dichtelement zum Abdichten des Bereichs zwischen der Anschlussvorrichtung und dem Gehäuse der elektrischen Maschine vorgesehen. Das Dichtelement kann beispielsweise aus einem Elastomer oder ähnlichem hergestellt sein. Zum Beispiel kann es sich bei dem Dichtelement um eine umlaufende Gummidichtung handeln.

Gemäß einer Ausführungsform umfassen die Stromschienen-Elemente jeweils einen Halteabschnitt. Dieser Halteabschnitt kann dazu ausgebildet sein, während eines Spritzgussprozesses zum Anbringen des Spritzgusselements das Stromschienen-Element zu fixieren. Ein solcher Halteabschnitt kann auf einer Seite der Stromschienen-Elemente vorgesehen sein, welche in Richtung des Anschlussbereichs für den Stromrichter weist. Zusätzlich oder alternativ kann ein solcher Halteabschnitt auch auf der gegenüberliegenden Seite der Stromschienen-Elemente vorgesehen sein, welcher von dem Spritzgusselement in Richtung des Anschlusses für die Statorwicklungen weist.

Die obigen Ausgestaltungen und Weiterbildungen lassen sich, soweit sinnvoll, beliebig miteinander kombinieren. Weitere Ausgestaltungen, Weiterbildungen und Implementierungen der Erfindung umfassen auch nicht explizit genannte Kombinationen von zuvor oder im Folgenden bezüglich den Ausführungsbeispielen beschriebenen Merkmalen der Erfindung. Insbesondere wird der Fachmann auch Einzelaspekte als Verbesserungen oder Ergänzungen zu den jeweiligen Grundformen der Erfindung hinzufügen.

### Kurze Beschreibung der Zeichnungen

Weitere Merkmale und Vorteile der Erfindung werden nachfolgend anhand der Figuren erläutert. Dabei zeigen:
- Fig. 1:: eine schematische Darstellung eines Querschnitts durch eine Anschlussvorrichtung gemäß einer Ausführungsform;
- Fig. 2:: eine schematische Draufsicht auf eine Anschlussvorrichtung gemäß einer Ausführungsform;
- Fig. 3:: eine schematische Darstellung einer elektrischen Maschine mit einer Anschlussvorrichtung gemäß einer Ausführungsform; und
- Fig. 4:: ein Ablaufdiagramm, wie es einem Verfahren zum Herstellen einer Anschlussvorrichtung gemäß einer Ausführungsform zugrunde liegt.

### Beschreibung von Ausführungsformen

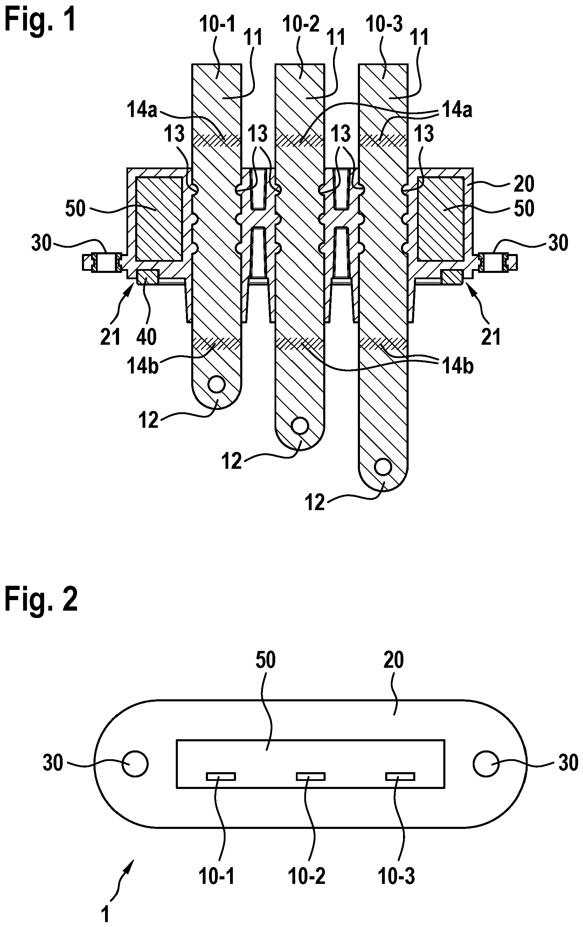

Figur 1 zeigt eine schematische Darstellung eines Querschnitts durch eine Anschlussvorrichtung 1 für eine elektrische Maschine gemäß einer Ausführungsform. Die Anschlussvorrichtung 1 umfasst mehrere Stromschienen-Elemente 10-i. Die Anzahl der Stromschienen-Elemente 10-i entspricht hierbei in der Regel der Anzahl der elektrischen Phasen in der elektrischen Maschine. Neben der hier dargestellten üblichen Anzahl von drei Stromschienen-Elementen 10-i sind jedoch grundsätzlich auch Ausführungsform mit einer hiervon abweichenden Anzahl von Stromschienen-Elementen möglich.

Die einzelnen Stromschienen-Elemente 10-i können in einem ersten, hier oben dargestellten Bereich 11 derart ausgebildet sein, dass sie mit einem elektrischen Stromrichter für die elektrische Maschine verbunden werden können. Gegebenenfalls kann die Form dabei derart angepasst werden, dass eine direkte Kontaktierung mit dem Stromrichter möglich ist.

In einem gegenüberliegenden, hier unten dargestellten Bereich 12 können die einzelnen Stromschienen-Elemente 10-i derart ausgebildet sein, dass sie mit den Anschlüssen für die Phasenwicklungen am Stator der elektrischen Maschine verbunden werden können. Auch hierbei können Länge, Form, Anschlussbereich, etc. entsprechend den Anforderungen für den Anschluss angepasst werden.

Die einzelnen Stromschienen-Elemente 10-i sind dabei aus einem elektrischen leitfähige Material, beispielsweise Kupfer oder ähnlichem hergestellt. Dabei ist gegebenenfalls keine besondere Beschichtung des Materials für die Stromschienen-Elemente 10-i erforderlich.

In einem mittleren Bereich sind die Stromschienen-Elemente 10-i mittels eines Spritzgusselements 20 fixiert. Das Spritzgusselement 20 ist dabei elektrisch isolierend. Dabei gewährleistet das Spritzgusselement 20, dass die Stromschienen-Elemente 10-i an ihrer gewünschten Position sind und eine ausreichende Isolation zwischen den einzelnen Stromschienen-Elementen 10-i vorhanden ist.

Zur besseren Fixierung können an den Stromschienen-Elementen 10-i Aussparungen 13 vorgesehen sein. Bei diesen Aussparungen 13 kann es sich, wie in Figur 1 dargestellt, beispielsweise um Einkerbungen o. ä. handeln. Grundsätzlich sind jedoch auch andere geeignete Ausgestaltungen möglich, die sicherstellen, dass die Stromschienen-Elemente 10-i zuverlässig durch das Spritzgusselement 20 gehalten werden.

Für das Herstellen des Anschlusselements 1 können die einzelnen Stromschienen-Elemente 10-i beispielsweise in eine Form einer Spritzgussvorrichtung eingelegt werden. Um die Stromschienen-Elemente 10-i während des Spritzgussvorgangs zu fixieren, kann zwischen der Position des Spritzgusselements 20 und den Anschlussbereichen 11 bzw. 12 für den Stromrichter bzw. die Statorwicklungen ein Haltebereich 14a, 14b vorgesehen sein. An diesem Halsbereich 14a, 14b können die Stromschienen-Elemente 10-i während des Spritzgussprozesses durch eine geeignete Haltevorrichtung fixiert werden, bis das Spritzgussmaterial ausgehärtet ist.

Weiterhin ist in der Anschlussvorrichtung 1 ein Filterelement 50 vorgesehen, welches die Stromschienen-Elemente 10-i umschließt. Beispielsweise als Filterelement 50 ein Ferritkern vorgesehen sein. Ein solches Filterelement 50 kann elektromagnetische Störeinflüsse minimieren. Das Filterelement 50 kann bei der Herstellung der Anschlussvorrichtung 1 ebenfalls in die Spritzgussform eingebracht werden. Somit kann während des Spritzgussvorgangs das Spritzgussmaterial die Stromschienen-Elemente 10-i und ebenso das Filterelement 50 umschließen und fixieren. Hierdurch wird das Filterelement 50 ein integraler Bestandteil des Spritzgusselements 20 und damit auch des Anschlusselements 1.

Ferner können in der Anschlussvorrichtung 1 eine oder mehrere Buchsen 30 vorgesehen sein. Bei diesen Buchsen kann es sich um Öffnungen handelt, durch welche eine Schraube geführt werden kann, um das Anschlusselement 1 an einem Gehäuse der elektrischen Maschine zu verschrauben. Beispielsweise können für die Buchsen auch geeignete Buchsenelemente aus Metall oder einem anderen geeigneten Material vorgesehen sein, welche während des Herstellens des Spritzgusselement 20 ebenfalls mit umspritzt werden.

Weiterhin kann in dem Spritzgusselement 20 eine Aussparung 21 vorgesehen sein, in welche ein Dichtelement 40 eingebracht werden kann. Bei dieser Aussparung kann es sich beispielsweise um eine vollständig umlaufende Aussparung handeln, in die ein Dichtelement 40, wie zum Beispiel ein Gummiring o. ä., eingebracht wird. Grundsätzlich kann ein beliebiges geeignetes Dichtmaterial, beispielsweise ein Elastomer o. ä. als Dichtelement 40 eingesetzt werden. Neben der in Figur 1 dargestellten Ausführungsform, bei welcher das Dichtelement 40 am seitlichen Rand der Anschlussvorrichtung 1 vorgesehen ist, ist es auch möglich, dass Dichtelement 40 und somit auch die entsprechende Aussparung 21 an einer Seite vorzusehen, welche in Richtung der Anschlussbereiche 12 für die Statorwicklungen weist.

Figur 2 zeigt eine schematische Darstellung einer Draufsicht auf eine Anschlussvorrichtung 1 gemäß der Ausführungsform. Die hierbei dargestellten Komponenten für die Stromschienen-Elemente 10-i, das Spritzgusselement 20, die Buchsen 30, etc. entsprechend den korrespondierenden Komponenten gemäß Figur 1.

Die Ausgestaltung des Spritzgusselements 20 ist dabei entsprechend einer Öffnung ausgebildet, in die das Anschlusselement 1 an dem Gehäuse einer elektrischen Maschine eingebracht wird. Somit kann das Spritzgusselement 20 diese Öffnung vollständig verschließen. Zur Befestigung des Anschlusselements 1 an dem Gehäuse der elektrischen Maschine kann das Spritzgusselement 20 an den Buchsen 30 mit dem Gehäuse verschraubt werden. Werden dabei beispielsweise selbstsichernde Schrauben verwendet, so kann ein sichere und zuverlässige Verriegelung gewährleistet werden. Diesem Fall kann gegebenenfalls auf eine Absicherung mittels Interlock oder ähnlichem verzichtet werden.

Wie in Figur 2 weiter zu erkennen ist, umschließt das Filterelemente 50 die Stromschienen-Elemente 10-i ringförmig. Dabei ist das Filterelemente 50 vorzugsweise vollständig vom Material des Spritzgusselements 20 umschlossen.

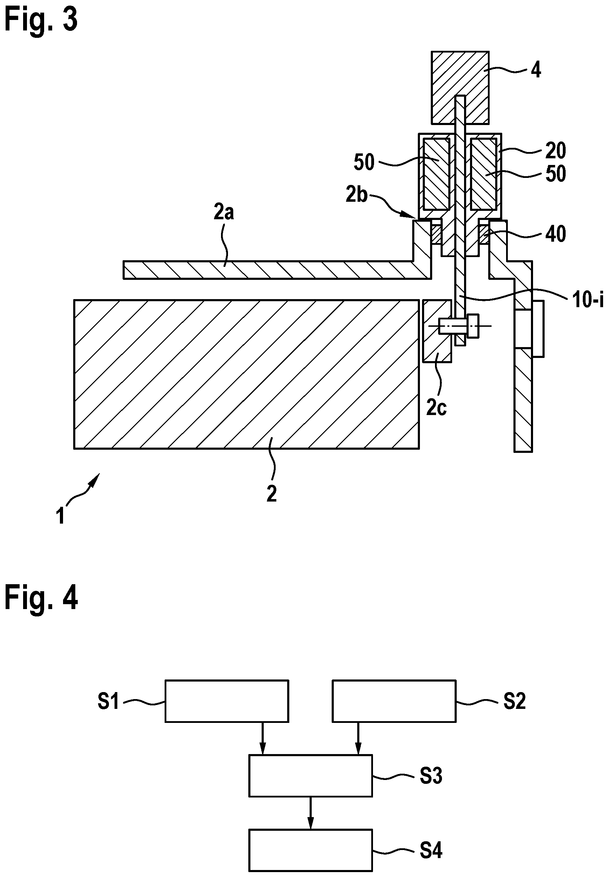

Figur 3 zeigt eine schematische Darstellung eines Querschnitts zur Veranschaulichung des Anschlusses einer elektrischen Maschine mit einem Anschlusselement 1 gemäß einer Ausführungsform. Die elektrische Maschine umfasst dabei unter anderem einen Stator 2 mit entsprechenden Anschlüssen 2c für die Statorwicklungen. Die inneren Komponenten elektrischen Maschine sind dabei von einem Gehäuse 2a umgeben. An diesem Gehäuse 2 ist eine Öffnung 2b vorgesehen. In dieser Öffnung kann die erfindungsgemäße Anschlussvorrichtung 1 eingebracht werden. Daraufhin können die Anschlussbereiche 12 der Sammelschienen-Elemente 10-i mit den Anschlüssen 2c für die Statorwicklungen verbunden, beispielsweise verschraubt werden. An den gegenüberliegenden Enden der Sammelschienen-Elemente 10-i können die Anschlussbereiche 11 mit einem elektrischen Stromrichter 4 oder einer anderen Spannungsquelle verbunden werden. Wie oben bereits beschrieben, kann das Anschlusselement 1 an den Buchsen 30 mit dem Gehäuse 2a verschraubt werden. Durch das Dichtelement 40 wird dabei eine sichere und zuverlässige Abdichtung erreicht.

Figur 4 zeigt ein Ablaufdiagramm, wie es einem Verfahren zum Herstellen eines Anschlusselements 1 gemäß einer Ausführungsform zugrunde liegt. Bei dem Anschlusselement 1 kann es sich dabei um das zuvor beschriebene Anschlusselement 1 handeln. Entsprechend kann das nachfolgende Verfahren beliebige Schritte aufweisen, die zur Herstellung eines solchen Anschlusselements 1 erforderlich sein können. Analog kann auch ein zuvor beschriebenes Anschlusselement 1 beliebige Komponenten aufweisen, wie sie bei der Herstellung des nachfolgend beschriebenen Verfahrens entstehen können.

In einem Schritt S 1 werden mehrere Stromschienen-Elemente 10-i bereitgestellt. Dabei wird für jede elektrische Phase der elektrischen Maschine ein Stromschienen-Element 10-i bereitgestellt. In Schritt S 2 wird ein Filterelement 50, beispielsweise mit einem Ferritkern, bereitgestellt. Daraufhin erfolgt in Schritt S 3 ein Anordnen des Filterelements 50 und der mehreren Stromschienen-Elemente 10-i in einer Spritzgussvorrichtung. Anschließend erfolgt in Schritt S 4 ein Umspritzen des Filterelements 50 und der mehreren Stromschienen-Elemente 10-i mit einem elektrisch isolierenden Material. Hierdurch wird ein elektrisch isolierendes Spritzgusselement 20 ausgebildet.

Die mehreren Stromschienen-Elemente 10-i können dabei jeweils aus einem unbeschichteten elektrisch leitfähigen Material gebildet werden. Ferner ist jedes Stromschienen-Element 10-i dazu ausgebildet, jeweils an einem ersten Ende 11 mit einem Statoranschluss 2c der elektrischen Maschine elektrisch gekoppelt zu werden und an einem zweiten Ende 12 mit einem Anschlusselement eines Wechselrichters 4 elektrisch gekoppelt zu werden.

In einem weiteren Schritt kann ein umlaufendendes Dichtelements 40 an dem Spritzgusselement 20 angebracht werden. Dieses Dichtelement 40 kann beispielsweise in einer umlaufenden Aussparung 21 des Spritzgusselements 20 angebracht werden. Das Anbringen kann sowohl automatisiert als auch manuell erfolgen. Wie oben bereits ausgeführt, kann das Dichtelement 40 sowie die hierzu angepasste Aussparung 21 entweder zeitlich oder einer dem Gehäuse zugewandten Fläche vorgesehen sein

Zusammenfassend betrifft die vorliegende Erfindung ein Anschlusselement für eine mehrphasige elektrische Maschine. Das Anschlusselement ist hierbei derart einfach ausgestaltet, dass es mittels eines einfachen Spritzgussprozesses realisiert werden kann, bei welchem mehrere Sammelschienen-Elemente umspritzt werden. Hierbei ist in dem Spritzgusselement, das die Sammelschienen-Elemente fixiert, zusätzlich ein Filterelement, beispielsweise ein Ferritkern integriert. Auf diese Weise kann eine sehr kompakte Bauform für ein Anschlusselement mit gleichzeitiger Filterfunktion realisiert werden.

## Patentansprüche

1. Anschlussvorrichtung (1) für eine mehrphasige elektrische Maschine, mit:
mehreren Stromschienen-Elementen (10-i), wobei für jede elektrische Phase der elektrischen Maschine ein Stromschienen-Element (10-i) vorgesehen ist;
einem elektrisch isolierenden Spritzgusselement (20), das die mehreren Stromschienen-Elemente (10-i) jeweils an vorbestimmten Positionen umschließt und die mehreren Stromschienen-Elemente (10-i) dadurch fixiert, und
einem Filterelement (50), das in das Spritzgusselement (20) eingebettet ist und die mehreren Stromschienen-Elemente (10-i) umschließt,
wobei jedes Stromschienen-Element (10-i) dazu ausgebildet ist, jeweils an einem ersten Ende (12) mit einem Statoranschluss (2c) der elektrischen Maschine elektrisch gekoppelt zu werden und an einem zweiten Ende (11) mit einem Anschlusselement eines Wechselrichters (4) elektrisch gekoppelt zu werden.

2. Anschlussvorrichtung (1) nach Anspruch 1, wobei das Filterelement (50) einen Ferritkern umfasst.

3. Anschlussvorrichtung (1) nach Anspruch 1 oder 2, wobei jedes Stromschienen-Element (10-i) in einem Bereich des umschließenden Spritzgusselements eine Aussparung (13) zur Fixierung des Stromschienen-Elements (10-i) in dem Spritzgusselement (20) aufweist.

4. Anschlussvorrichtung (1) nach einem der Ansprüche 1 bis 3, wobei das Spritzgusselement (20) mehrere umspritzte Buchsen (30) umfasst, wobei die Buchsen (30) dazu ausgestaltet sind, mittels einer Schraube das Anschlusselement mit einem Gehäuse (2a) der elektrischen Maschine zu verschrauben.

5. Anschlussvorrichtung (1) nach einem der Ansprüche 1 bis 4, wobei das Spritzgusselement (20) eine umlaufende Aussparung (21) aufweist, die dazu ausgelegt ist, ein Dichtelement (40) zum Abdichten eines Bereichs zwischen der Anschlussvorrichtung (1) und einem Gehäuse (2a) der elektrischen Maschine aufzunehmen.

6. Anschlussvorrichtung (1) nach Anspruch 5, mit einem Dichtelement (40) zum Abdichten des Bereichs zwischen der Anschlussvorrichtung (1) und dem Gehäuse (2a) der elektrischen Maschine.

7. Anschlussvorrichtung (1) nach einem der Ansprüche 1 bis 6, wobei die Stromschienen-Elemente (10-i) jeweils einen Halteabschnitt (14a, 14b) umfassen, der dazu ausgebildet ist, während eines Spritzgussprozesses zum Anbringen des Spritzgusselements (20) das Stromschienen-Element (10-i) zu fixieren.

8. Elektrische Maschine, mit:
einem Gehäuse (2a), das dazu ausgestaltet ist, einen Stator (2) und einen Rotor der elektrischen Maschine aufzunehmen; und
einer Anschlussvorrichtung (1) nach einem der Ansprüche 1 bis 7,
wobei das Gehäuse (2a) eine Öffnung (2b) für das Anschlusselement (1) aufweist, und
wobei jeweils ein Stromschienen-Element (10-i) mit einer korrespondierenden Phase des Stators (2) der elektrischen Maschine elektrisch gekoppelt ist.

9. Elektrische Maschine nach Anspruch 8, wobei das Anschlusselement (1) mittels selbstsichernder Schrauben mit dem Gehäuse (2a) der elektrischen Maschine verschraubt ist.

10. Verfahren zum Herstellen eines Anschlusselements (1) für eine elektrische Maschine, mit den Schritten:
Bereitstellen (S 1) mehrerer Stromschienen-Elementen (10-i), wobei für jede elektrische Phase der elektrischen Maschine ein Stromschienen-Element (10-i) bereitgestellt wird;
Bereitstellen (S 2) eines Filterelements (50) mit einem Ferritkern;
Anordnen (S 3) der mehreren Stromschienen-Elemente (10-i) und dem Filterelement (50) in einer Spritzgussvorrichtung; und
Umspritzen (S 4) der mehreren Stromschienen-Elemente (10-i) und des Filterelements (50) mit einem elektrisch isolierenden Material, um ein elektrisch isolierendes Spritzgusselement (20) auszubilden,
wobei jedes Stromschienen-Element (10-i) dazu ausgebildet ist, jeweils an einem ersten Ende (12) mit einem Statoranschluss (2c) der elektrischen Maschine elektrisch gekoppelt zu werden und an einem zweiten Ende (11) mit einem Anschlusselement eines Wechselrichters (4) elektrisch gekoppelt zu werden.
